# EUROPEAN PATENT APPLICATION

(11) **EP 2 109 100 A1**
(43) Date of publication of application: **14.10.2009**
(21) Application number: 08172966.7
(22) Date of filing: 29.12.2008
(51) Int. Cl.: G11B 5/855, G11B 5/82

(54) **Magnetic recording medium and magnetic recording and reproducing device**

(30) Priority: 09.04.2008 JP 2008101378
(71) Applicant: Fujitsu Limited, Kawasaki-shi, Kanagawa 211-8588 (JP)
(72) Inventor: Ihara, Nobutaka, Kawasaki-shi, Kanagawa 211-8588 (JP); Takeshita, Hiroto, Kawasaki-shi, Kanagawa 211-8588 (JP)
(74) Representative: Fenlon, Christine Lesley

(57) **Abstract**

There is provided a magnetic recording medium which contains a substrate in the shape of a disk, and a plural of recording bit formed on the substrate, wherein a bottom face of the recording bit is disposed so as to face the substrate, a top face of the recording bit is disposed so as to correspond to the bottom face of the recording bit, and Twb is larger than Twt, where Twb indicates a width of the bottom face with respect to a radius direction of the magnetic recording medium, and Twt indicates a width of the top face with respect to the radius direction.

## Description

### CROSS-REFERENCE TO RELATED APPLICATIONS

This application is based upon and claims the benefits of the priority from the prior Japanese Patent Application No. 2008-101378 filed on April 9, 2008, the entire contents of which are incorporated herein by reference.

### BACKGROUND OF THE INVENTION

### Field of the Invention

The present invention is directed to a magnetic recording medium and a magnetic recording and reproducing device. Specifically, the present invention relates to the magnetic recording medium which realizes a high recording density, such as a hard disk, and the magnetic recording and reproducing device which contains such magnetic recording medium.

### Description of the Related Art

In recent years, storage capacity of magnetic recording media has been increased. Bit patterned media is an example of the technique which remarkably increases a recording density of magnetic recording media.

In the technologies of the bit patterned media, track pitch thereof has been shortened for the purpose of increasing the recording density. However, by shortening the track pitch, a read element erroneously reads the information of the adjacent tracks. This increases crosstalk, and as a result, occurrences of error tend to be increased. In order to overcome this problem, there has been proposed a technique in which a width of a recording bit is narrowed as shown in FIG. 8, so as to reduce crosstalk (see, for example, Japanese Patent Application Laid-Open (JP-A) No. 03-22211). However, this technique has a problem such that the volume of the recording bit becomes small due to the narrowed bit width, and therefore the recording becomes unstable by being affected from the heat fluctuation.

It is desirable to solve the problems in the conventional art, and to achieve the following desirable outcome. Specifically, it is desirable to provide a magnetic recording medium and a magnetic recording and reproducing device, which have less crosstalk and less influence from heat fluctuation.

### BRIEF SUMMARY OF THE INVENTION

According to an aspect of an embodiment, there is the magnetic recording medium which contains a substrate in the shape of a disk, and a plural of a recording bit formed directly or indirectly on the substrate, wherein a bottom face of the recording bit is disposed so as to face the substrate, a top face of the recording bit is disposed so as to correspond to the bottom face of the recording bit, and Twb is larger than Twt, where Twb indicates a width of the bottom face with respect to a radius direction of the magnetic recording medium, and Twt indicates a width of the top face with respect to the radius direction.

Since Twb is larger than Twt on the magnetic recording medium, class talk is reduced by lowering the influence of magnetic force from the adjacent recording bits, as well as reducing the influence from the head fluctuation while maintaining the volume of the recording bit.

According to an aspect of an embodiment, there is the magnetic recording and reproducing device which contains the aforementioned magnetic recording medium, and a read element configured to read information recorded on the magnetic recording medium, wherein, in case where the read element faces two or more recording bits, the read element corresponds to a top face and a side face of one of the recording bits, and the read element corresponds to side faces of the other recording bits.

Since the read element of the magnetic recording and reproducing device only corresponds to the side faces of the recording bits, excluding the one recording bit, the read element is prevented from erroneously reading the information of the adjacent tracks.

In accordance with embodiments of the present invention, the problems in the conventional art can be solved, and it is provided the magnetic recording medium and the magnetic recording and reproducing device, which may lower crosstalk and an influence of heat fluctuation.

### BRIEF DESCRIPTION OF THE DRAWINGS

Preferred features of the present invention will now be described, purely by way of example, with reference to the accompanying drawings, in which:
FIG. 1 is a schematic diagram showing an example of a structure of a recording bit on the magnetic recording medium of embodiments of the present invention.
FIG. 2 is a schematic diagram showing an example of a recording bit pattern on the magnetic recording medium of embodiments of the present invention.
FIG. 3A is a diagram showing a process for forming recording bits on the magnetic recording medium of embodiments of the present invention (part 1).
FIG. 3B is a diagram showing a process for forming recording bits on the magnetic recording medium of embodiments or the present invention (part 2).
FIG. 3C is a diagram showing a process for forming recording bits on the magnetic recording medium of embodiments of the present invention (part 3).
FIG. 3D is a diagram showing a process for forming recording bits on the magnetic recording medium of embodiments of the present invention (part 4).
FIG. 3E is a diagram showing a process for forming recording bits on the magnetic recording medium of embodiments of the present invention (part 5).
FIG. 4A is a diagram showing a process for forming recording bits on the magnetic recording medium of embodiments of the present invention (part 6).
FIG. 4B is a diagram showing a process for forming recording bits on the magnetic recording medium of embodiments of the present invention (part 7).
FIG. 4C is a diagram showing a process for forming recording bits on the magnetic recording medium of embodiments of the present invention (part 8).
FIG. 5A is a diagram showing a process for forming recording bits on the magnetic recording medium of embodiments of the present invention (part 9).
FIG. 5B is a diagram showing a process for forming recording bits on the magnetic recording medium of embodiments of the present invention (part 10).
FIG. 5C is a diagram showing a process for forming recording bits on the magnetic recording medium of embodiments of the present invention (part 11).
FIG. 6 is a diagram explaining the arrangement of the read element and the recording bits.
FIG. 7 is a diagram showing the correlation between crosstalk and the track pitch of the recording bits.

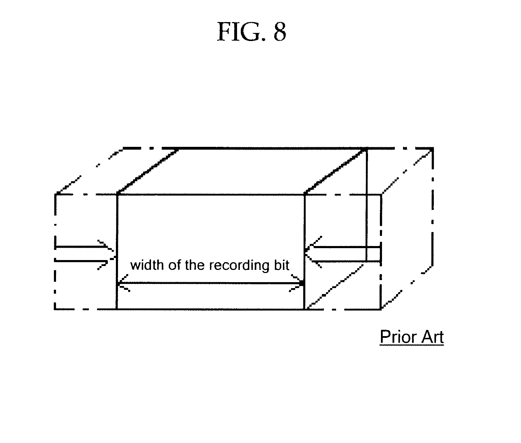

FIG. 8 is a schematic diagram showing a structure of the recording bit on the conventional magnetic recording medium.

### DESCRIPTION OF THE PREFERRED EMBODIMENTS

### (Magnetic recording medium)

The magnetic recording medium embodying the present invention contains a substrate and a recording bit, and optionally contains other layers, if necessary.

It is noted that, as used therein and in the attached claims, the singular forms "a", "an", and "the" include plural references unless the context clearly indicates otherwise.

### -Substrate-

The substrate may be suitably selected and/ or prepared depending on the intended purpose, without any restrictions in its structure, size, material, and the like, provided that it is in the shape of a disk. The structure of the substrate may be a single-layered structure, or a laminate structure. The material of the substrate is, for example, glass, aluminum, silicon, quartz, and or like.

The specific examples of the substrate include a glass substrate, an aluminum substrate, a silicon substrate, and a ceramic substrate, all of which are designed for use as a substrate of a magnetic disk. The substrate may be arbitrarily prepared, or selected from the commercially available products.

### -Recording bit-

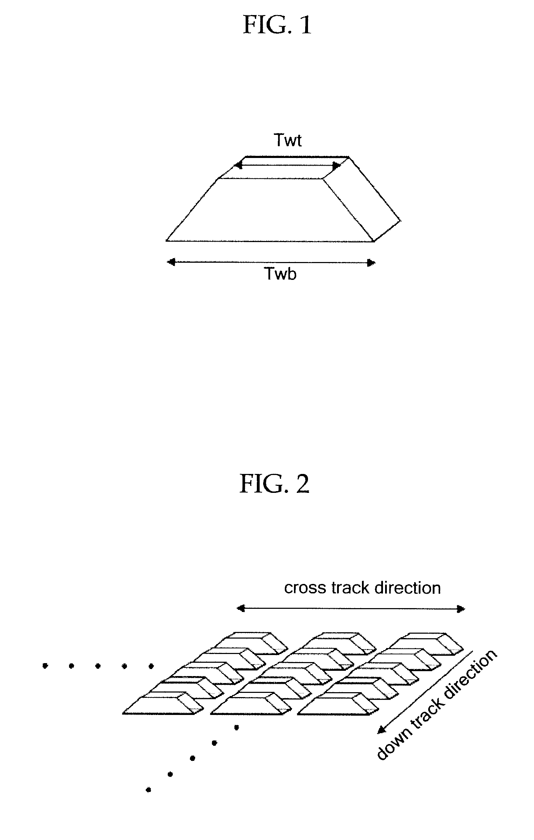

The recording bit is suitably designed depending on the indented purpose without any restrictions, provided that it is formed directly or indirectly on the substrate, the bottom face of the recording bit is disposed so as to face the substrate, the top face of the recording bit is disposed so as to correspond to the side of the bottom face of the recording bit, and Twb, ie. a width of the bottom face with respect to the radius direction of the magnetic recording medium (the direction of the cross track) is larger than Twt, i.e. a width of the top face with respect to the radius direction (the direction of the cross track). The bottom face is preferably in the shape of a rectangle, a circle, or an ellipse. For example, as shown in FIG. 1, the recording bit is in the shape of a truncated pyramid (the bottom face has a rectangular shape), and Twb is larger than Twt.

It is preferable that a plural of the recording bit is regularly aligned in the directions of cross track and down track, and rows of the recording bits are aligned at intervals, as shown in FIG. 2. Moreover, the row(s) of the recording bits is preferably disposed concentrically or spirally. In the case where the magnetic recording medium is used for a hard disk, it is preferable that the rows of the recording bits are disposed concentrically in view of the easiness of the access. In the case where the magnetic recording medium is used for a video disk, it is preferable that the row of the recording bits is disposed spirally in view of the easiness of the repeated reproduction.

The material of the recording bits is suitably selected depending on the intended purpose without any particular restrictions, but it is preferably a hard magnetic material. Examples of the hard magnetic material include an alloy containing at least one element selected from the group consisting of Co, Fe, Ni, Pt, Cr, B, Ti and Ta.

The structure of the recording bit is suitably selected depending on the intended purpose without any particular restrictions. The structure thereof may be a single-layered structure, or a multilayered structure.

### --Forming method of recording bits--

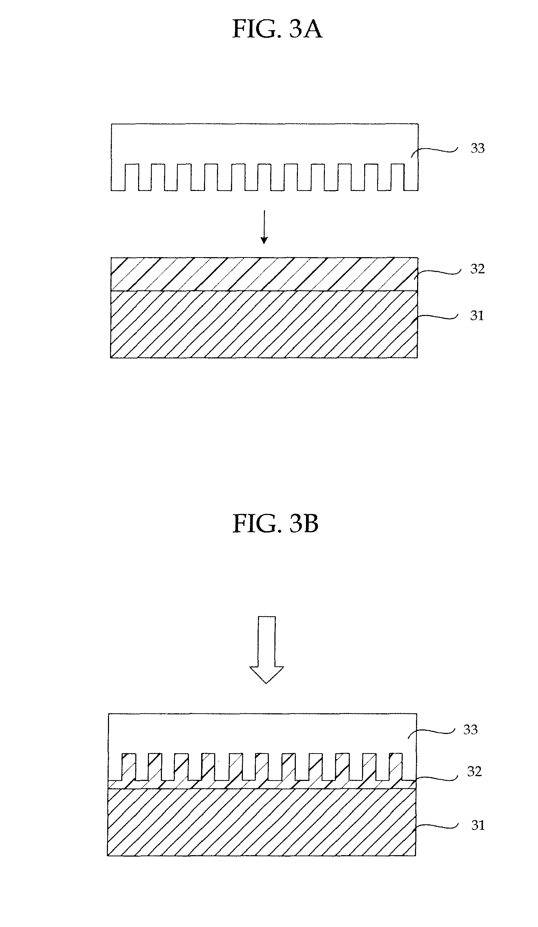

The forming method of the recording bits is suitably selected depending on the intended purpose without any particular restrictions. Examples thereof include a UV nanoprint method, and the like. Hereinafter, the UV nanoprint method will be described with reference to FIGs. 3A-3E.

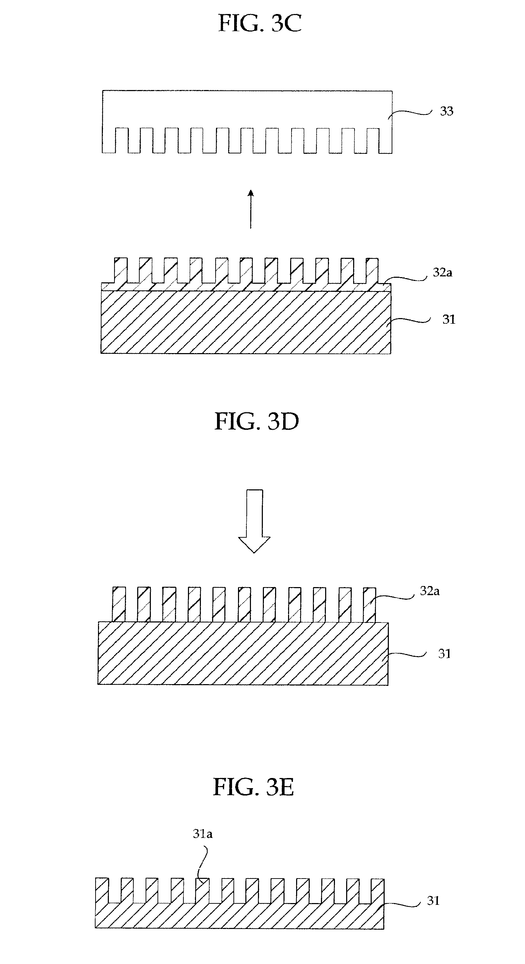

At first, a photocuring resin layer 32 is formed on a hard magnetic layer 31 formed of a hard magnetic material, which has been previously formed on a substrate. A mold structure 33 on which a plural of convex parts are formed is pressed onto the photocuring resin layer 32 (FIG. 3A), an ultraviolet ray is emitted from the side of the mold structure 33 as shown with the arrow (FIG. 3B), and then the mold structure 33 is removed from the photocuring resin layer 32 (FIG. 3C). In this manner, the convex-concave pattern formed on the mold structure 33 is transferred onto the photocuring resin layer 32, and the photocuring resin pattern 32a is formed.

The photocuring resin is suitably selected without any restrictions, provided that it is cured by irradiation of light. Examples thereof include a photocuring resin for UV nanoprint PAK-01 (manufactured by Toyo Gosei, Co., Ltd.) (refer to JP-A No. 2008-19292 for the details of photocuring).

Thereafter, the excess film of the photocuring resin pattern 32a is removed by reactive ion etching (RIE) (FIG. 3D), and dry etching is performed by using, as a mask, the photocuring resin pattern 32a, from which the excess film has been removed (FIG. 3E). As a result, a bit pattern comprised of a plural of the convex part 31a is formed on the hard magnetic layer 31.

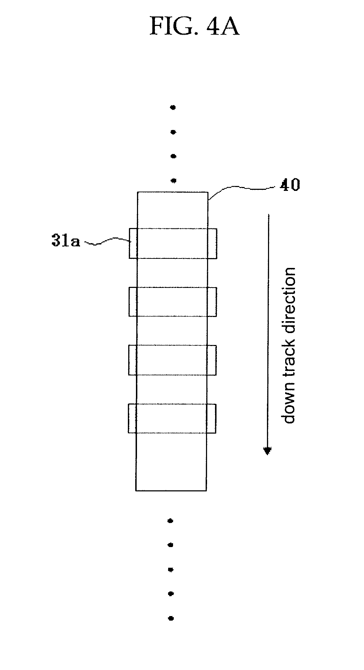

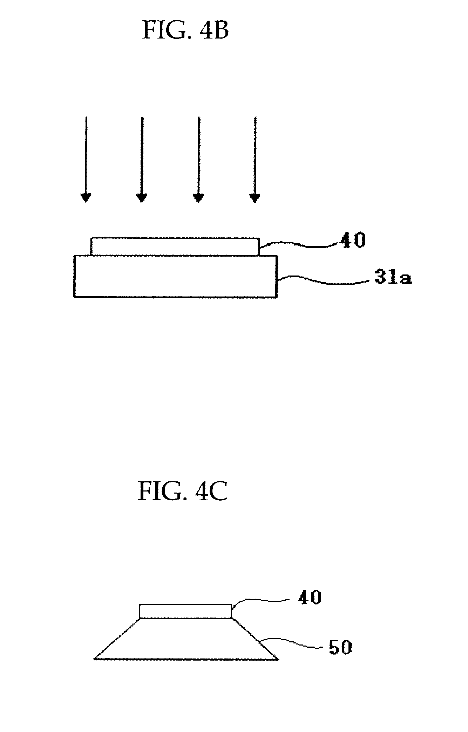

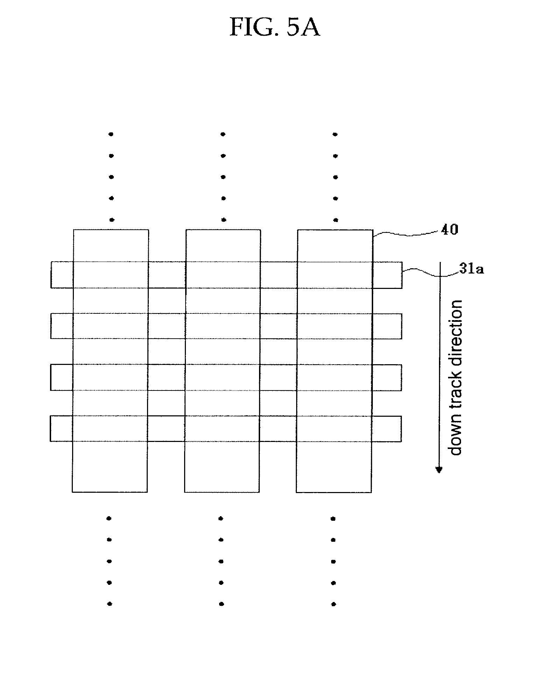

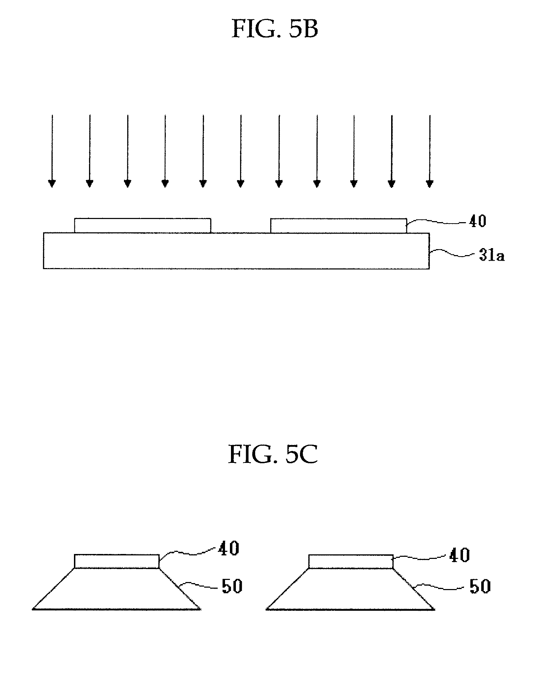

Furthermore, a transfer pattern (mask) 40 is formed on the bit pattern comprised of a plural of the convex parts 31a (FIG. 4A and FIG. 5A), dry etching is performed thereon (FIG. 4B and FIG. 5B), and then recording bits 50 in the shape of a truncated pyramid are formed (FIG. 4C and FIG. 5C).

### -Other layers-

The aforementioned other layers are suitably selected depending on the intended purpose without any particular restrictions. Examples thereof include an intermediate layer, a soft magnetic layer, a protective layer, and the like.

### --Intermediate layer--

The magnetic recording medium may contain an intermediate layer formed of a non-magnetic material, in between the substrate and the recording bits. The material of the protective layer is suitably selected from the ones known in the art without any particular restrictions. Examples thereof include at least one selected from Cu, Al, Cr, Pt, W, Nb, Ru, Ta and Ti, and the like. These may be used singly or in combination of two or more.

The thickness of the intermediate layer is not particularly limited, and can be suitably adjusted depending on the intended purpose.

The forming method of the intermediate layer is not particularly limited, and can be performed in accordance with the conventional method. For example, the intermediate layer may be formed in accordance with a sputtering method or the like.

### --Soft magnetic layer--

The magnetic recording medium may contain a soft magnetic layer in between the substrate and the recording bit.

The material of the soft magnetic layer is suitably selected from the materials known in the art without any particular restrictions. Examples thereof include at least one selected from NiFe, FeSiAl, FeC, FeCoB, FeCoNiB and CoZrNb, and the like. These may be used singly or in combination of two or more.

The formation of the soft magnetic layer can be preformed in accordance with the conventional method, without any particular restrictions. For example, the soft magnetic layer may be formed in accordance with a sputtering method, an electroless plating method, or the like.

### --Protective layer--

The protective layer is a layer which functions as a protection for the recording bits, and is disposed on the entire surface and/or top face of the recording bits. A single layer thereof may be disposed, or two or more layers thereof may be disposed. Moreover, the protective layer may have a single-layered structure, or a laminate structure.

The material of the protective layer is suitably selected depending on the intended purpose, without any particular restrictions. Examples thereof include DLC (diamond-like carbon), and the like.

The thickness of the protective layer is suitably adjusted depending on the intended purpose without any restrictions.

The formation of the protective layer is performed in accordance with the conventional method depending on the intended purpose, without any restrictions. For example, the protective layer may be formed in accordance with a sputtering method, a plasma CVD method, a coating method, or the like.

The magnetic recording medium embodying the present invention can be used in various magnetic recordings using a magnetic head. The magnetic recording medium embodying the present invention is especially preferably used in the magnetic recording by using a single magnetic head.

The magnetic recording medium embodying the present invention is capable of high density recording and high-speed recording, has a large storage capacity, and is of high quality. Therefore, the magnetic recording medium embodying the present invention can be designed and used as a various magnetic recording medium. For example, the magnetic recording medium embodying the present invention can be designed and used for a hard disk device which is widely used as an external memory device for a computer, a video recoding device for commercial use, and the like. The magnetic recording medium embodying the present invention is especially preferably designed and used for a magnetic disk such as a hard disk.

The magnetic recording reproducing device embodying the present invention contains the aforementioned magnetic recording medium embodying the present invention and a read element, and optionally contains other members, if necessary. For example, the magnetic recording reproducing device embodying the present invention contains the magnetic recording medium embodying the present invention as a hard disk, the read element, and a record element.

### -Read element-

The read element is suitably selected depending on the intended purpose without any particular restrictions, provided that it reads the information recorded on the magnetic recording medium embodying the present invention.

### --Arrangement of a read element and recording bits--

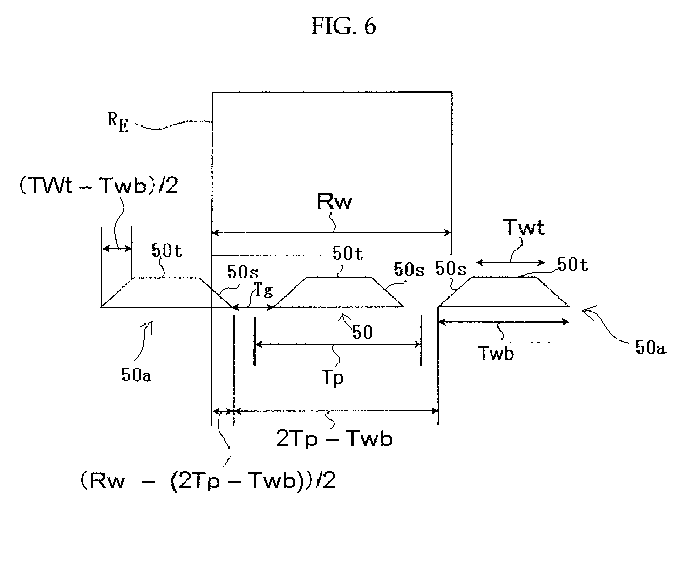

The arrangement of the reading element and the recording bits is such that, in case where the read element faces two or more recording bits formed on the magnetic recording medium, the read element corresponds to a top face and side faces of one of the recording bits, and the recording element corresponds to only side faces of the other recording bits. As shown in FIG. 6, when the center of the read element and the center of the recording bit are met and the formula: Rw ≥ 2Tp-Twb is satisfied, the formula: Twb-Twt>Rw-(2Tp-Twb) is satisfied. In the aforementioned formulae, Rw denotes a width of the read element with respect to the cross track direction (a width of the reed core), and Tp denotes a track pitch of the recording bit 50 (a sum of Twb and Tg wherein Twb denotes a width of the bottom face of the recording bit with respect to the radius direction (the cross track direction) and Tg denotes a space in between the recording bits). In this manner, the edge part R_{E} of the read element only corresponds to the side face 50s of the adjacent recording bit 50a without corresponding to the top face 50t of the adjacent recording bit 50a. Therefore, the read element can be prevented from erroneously reading the information recorded on the adjacent recording bits.

### Examples

Hereinafter, the examples embodying the present invention will be described, which however shall not be construed as limiting the invention thereto.

### (Example 1)

On an aluminum substrate, a soft magnetic underlayer (SUL) comprised of CoZrNb was formed at a thickness of 50 nm in accordance with a sputtering method, a non-magnetic intermediate layer comprised of Ru was formed at the thickness of 10 nm on the previously formed the soft magnetic underlayer, and then a hard magnetic layer comprised of CoCrPt alloy was formed at a thickness of 15 nm on the formed the non-magnetic intermediate layer.

Sequentially, a photocuring resin layer was formed at a thickness of 15 nm on the hard magnetic layer comprised of CoCrPt alloy, and a mold structure on which a plural of convex parts (a width with respect to the radius direction (cross track direction): 80 nm, a length with respect to the concentric direction (down track direction): 60 nm) had been formed was pressed onto the photocuring resin layer. Ultraviolet ray (wavelength: 300 nm to 400 nm, intensity: 170 mJ/cm²) was irradiated thereto from the side of the mold structure, and then the mold structure was removed from the photocuring layer to thereby transfer the convex-concave pattern formed on the mold structure to the photocuring resin and form a photocuring resin pattern.

Thereafter, reactive ion etching (RIE) was performed so as to remove an excess film from the photocuring resin pattern, and dry etching was performed by using, as a mask, the photocuring resin pattern from which the excess film had been removed, to thereby form a bit pattern containing cubical convex parts, each having a bit width (a width with respect to the radius direction (cross track direction)) of 80 nm, a bit length (a length with respect to the concentric direction (down track direction)) of 60 nm, and a track pitch (a sum of the bit width and the space between the adjacent bits) of 100 nm (FIG. 4A).

A transfer pattern (mask) formed of a resist was then formed on the bit pattern. Here, the transfer pattern had a line width of 60 nm which was narrower than the bit width of the bit pattern, which was 80nm. Thereafter, dry etching was performed thereon, to thereby form recording bits in the shaped of a truncated pyramid, each having Tbw, i.e. a width of the bottom face with respect to the radius direction (cross track direction), of 80 nm, Twt, i.e. a width of top face with respect to the radius direction (cross track direction), of 60 nm, and a track pitch (a sum of the width of the recording bit with respect to the radius direction (cross track direction) and the space in between the adjacent recording bits) of 100 nm. On the surface of the formed recording bits, a carbon protective layer was formed at a thickness of 3 nm in accordance with a CVD method, and a lubricant layer was formed at a thickness of 1.5 nm by applying a lubricant.

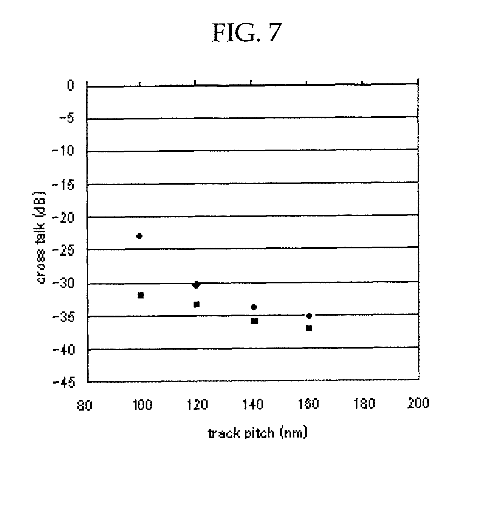

The thus prepared magnetic recording medium of Example 1 was subjected to a measurement of crosstalk by using a single-plate disk tester. The result is shown in FIG. 7.

### (Example 2)

A magnetic recording medium was prepared in the same manner as in Example 1, provided that a bit pattern containing cubical convex parts wherein a track pitch was 120 nm was formed, and recording bits in shape of a truncated pyramid wherein a track pitch thereof was 120 nm was formed. The crosstalk of the prepared magnetic recording medium was measured in the same manner as in Example 1. The result is shown in FIG. 7.

### (Example 3)

A magnetic recording medium was prepared in the same manner as in Example 1, provided that a bit pattern containing cubical convex parts wherein a track pitch was 140 nm was formed, and recording bits in shape of a truncated pyramid wherein a track pitch thereof was 140 nm was formed. The crosstalk of the prepared magnetic recording medium was measured in the same manner as in Example 1. The result is shown in FIG. 7.

### (Example 4)

A magnetic recording medium was prepared in the same manner as in Example 1, provided that a bit pattern containing cubical convex parts wherein a track pitch was 160 nm was formed, and recording bits in shape of a truncated pyramid wherein a track pitch thereof was 160 nm was formed. The crosstalk of the prepared magnetic recording medium was measured in the same manner as in Example 1. The result is shown in FIG. 7.

### (Example 5)

On an aluminum substrate, a soft magnetic underlayer (SUL) comprised of CoZrNb was formed at a thickness of 50 nm in accordance with a sputtering method, a non-magnetic intermediate layer comprised of Ru was formed at the thickness of 10 nm on the previously formed the soft magnetic underlayer, and then a hard magnetic layer comprised of CoCrPt alloy was formed at a thickness of 15 nm on the formed the non-magnetic intermediate layer.

Sequentially, a photocuring resin layer was formed at a thickness of 15 nm on the hard magnetic layer comprised of CoCrPt alloy, and a mold structure on which a plural of linear parts (a length with respect to the concentric direction (down track direction): 60 nm) had been formed was pressed onto the photocuring resin layer. Ultraviolet ray (wavelength: 300 nm to 400 nm, intensity: 170 mJ/cm²) was irradiated thereto from the side of the mold structure, then the mold structure was removed from the photocuring layer to thereby transfer the convex-concave pattern formed on the mold structure to the photocuring resin and form a photocuring resin pattern.

Thereafter, reactive ion etching (RIE) was performed so as to remove an excess film from the photocuring resin pattern, and dry etching was performed by using the photocuring resin pattern from which the excess film had been removed, to thereby form a pattern containing linear convex parts which extended in the direction of the radius (cross track direction), each having a length (a length with respect to the concentric direction (down track direction)) of 60 nm (FIG. 5A).

On the previously formed pattern, there was formed a linear transfer pattern (mask) formed of a resist, which extended in the concentric direction (down track direction) which was vertically crossed with the direction of the radius (cross track direction). Here, the transfer pattern had a line width of 60 nm. Thereafter, dry etching was performed, to thereby form recording bits in the shaped of a truncated pyramid, each having Tbw, i.e. a width of the bottom face with respect to the radius direction (cross track direction), of 80 nm, Twt, i.e. a width of top face with respect to the radius direction (cross track direction), of 60 nm, and a track pitch (a sum of the width of the recording bit with respect to the radius direction (cross track direction) and the space in between the adjacent recording bits) of 100 nm. On the surface of the formed recording bits, a carbon protective layer was formed at a thickness of 3 nm in accordance with a CVD method, and a lubricant layer was formed at a thickness of 1.5 nm by applying a lubricant.

### (Comparative Example 1)

On an aluminum substrate, a soft magnetic underlayer (SUL) comprised of CoZrNb was formed at a thickness of 50 nm in accordance with a sputtering method, a non-magnetic intermediate layer comprised of Ru was formed at the thickness of 10 nm on the previously formed the soft magnetic underlayer, and then a hard magnetic layer comprised of CoCrPt alloy was formed at a thickness of 15 nm on the formed the non-magnetic intermediate layer.

Sequentially, a photocuring resin layer was formed at a thickness of 15 nm on the hard magnetic layer comprised of CoCrPt alloy, and a mold structure on which a plural of convex parts (a width of radius direction (cross track direction): 60 nm, a length of concentric direction (down track direction): 60 nm) had been formed was pressed onto the photocuring resin layer. Ultraviolet ray (wavelength: 300 nm to 400 nm, intensity: 170 mJ/cm²) was irradiated thereto from the side of the mold structure, then the mold structure was removed from the photocuring layer to thereby transfer the convex-concave pattern formed on the mold structure to the photocuring resin and form a photocuring resin pattern.

Thereafter, reactive ion etching (RIE) was performed so as to remove an excess film from the photocuring resin pattern, and dry etching was performed by using, as a mask, the photocuring resin pattern from which the excess film had been removed, to thereby form a bit pattern containing cubical convex parts, each having a bit width (a width with respect to the radius direction (cross track direction)) of 60 nm, a bit length (a length with respect to the concentric direction (down track direction)) of 60 nm, and a track pitch (a sum of the bit width and the space between the adjacent bits) of 100 nm.

The thus prepared magnetic recording medium of Comparative Example 1 was subjected to a measurement of crosstalk by using a single-plate disk tester. The result is shown in FIG. 7.

### (Comparative Example 2)

A magnetic recording medium was prepared in the same manner as in Comparative Example 1, provided that a bit pattern containing cubical convex parts wherein a track pitch was 120 nm was formed. The crosstalk of the prepared magnetic recording medium was measured in the same manner as in Comparative Example 1. The result is shown in FIG. 7.

### (Comparative Example 3)

A magnetic recording medium was prepared in the same manner as in Comparative Example 1, provided that a bit pattern containing cubical convex parts wherein a track pitch was 140 nm was formed. The crosstalk of the prepared magnetic recording medium was measured in the same manner as in Comparative Example 1. The result is shown in FIG. 7.

### (Comparative Example 4)

A magnetic recording medium was prepared in the same manner as in Comparative Example 1, provided that a bit pattern containing cubical convex parts wherein a track pitch was 160 nm was formed. The crosstalk of the prepared magnetic recording medium was measured in the same manner as in Comparative Example 1. The result is shown in FIG. 7.

As shown in FIG. 7, it was found that the magnetic recording medium prepared in Example 1 (Twb: 80 nm, Twt: 60 nm, and track pitch:100 nm) had lower crosstalk than that of the magnetic recording medium prepared in Comparative Example 1 (Twb: 60 nm, Twt: 60 nm, and track pitch:100 nm).

As shown in FIG. 7, it was found that the magnetic recording medium prepared in Example 2 (Twb: 80 nm, Twt: 60 nm, and track pitch:120 nm) had lower crosstalk than that of the magnetic recording medium prepared in Comparative Example 2 (Twb: 60 nm, Twt: 60 nm, and track pitch:120 nm).

As shown in FIG. 7, it was found that the magnetic recording medium prepared in Example 3 (Twb: 80 nm, Twt: 60 nm, and track pitch:140 nm) had lower crosstalk than that of the magnetic recording medium prepared in Comparative Example 3 (Twb: 60 nm, Twt: 60 nm, and track pitch:140 nm).

As shown in FIG. 7, it was found that the magnetic recording medium prepared in Example 4 (Twb: 80 nm, Twt: 60 nm, and track pitch:160 nm) had lower crosstalk than that of the magnetic recording medium prepared in Comparative Example 4 (Twb: 60 nm, Twt: 60 nm, and track pitch:160 nm).

The head fluctuation is represented with an index of KuV/k_{B}T (Ku: anisotropic constant (8.2-10⁶ erg/cc), V: volume of recording bit; and k_{B}: Boltzmann constant, and T: temperature). The larger value of KuV/k_{B}T indicates that it is less likely affected from the heat fluctuation.

The single recording bit formed on the magnetic recording medium prepared in Examples 1-5 had a volume of 63,000 nm³, which was 1.16 times of the volume of the single recording bit formed on the magnetic recording medium prepared in Example 1, which was 54,000 nm². Therefore, under the same thermal condition, KuV/k_{B}T of the magnetic recording medium prepared in Examples 1-5 would be 1.16 times of KuV/k_{B}T of the magnetic recording medium prepared in Comparative Examples 1-4.

As had been mentioned above, it was found that the magnetic recording medium prepared in Examples 1-5 lowered crosstalk and the influence of the heat fluctuation, compared to the magnetic recording medium prepared in Comparative Examples 1-4.

## Claims

1. A magnetic recording medium, comprising:
a substrate in the shape of a disk; and
a plural of a recording bit formed on the substrate,
wherein a bottom face of the recording bit is disposed so as to face the substrate, a top face of the recording bit is disposed so as to correspond to the bottom face of the recording bit, and Twb is larger than Twt, where Twb indicates a width of the bottom face with respect to a radius direction of the magnetic recording medium, and Twt indicates a width of the top face with respect to the radius direction.

2. The magnetic recording medium according to claim 1, wherein the bottom face is in the shape of a rectangle, a circle or an ellipse.

3. The magnetic recording medium according to claim 1 or 2, wherein the recording bit is formed of a hard magnetic material.

4. The magnetic recording medium according to claim 3, wherein the hard magnetic material is an alloy comprising at least one element selected from the group consisting of Co, Fe, Ni, Pt, Cr, B, Ti and Ta.

5. The magnetic recording medium according to any one of claims 1 to 4, wherein the recording bit has a single-layered structure.

6. The magnetic recording medium according to any one of claims 1 to 4, wherein the recording bit has a multilayered structure.

7. The magnetic recording medium according to any one of claims 1 to 6, wherein the substrate is selected from a glass substrate, an aluminum substrate, a silicon substrate, or a ceramic substrate.

8. The magnetic recording medium according to any one of claims 1 to 7, further comprising:
a soft magnetic layer formed on the substrate; and
an intermediate layer formed on the soft magnetic layer.

9. A magnetic recording and reproducing device, comprising:
the magnetic recording medium as in any one of claims 1 to 8; and
a read element configured to read information recorded on the magnetic recording medium,
wherein, in case where the read element faces two or more recording bits, the read element corresponds to a top face and a side face of one of the recording bits, and the read element corresponds to side faces of the other recording bits.
